# EUROPÄISCHE PATENTSCHRIFT

(11) **EP 0 729 221 B1**
(45) Veröffentlichungstag und Bekanntmachung des Hinweises auf die Patenterteilung: **14.07.1999**
(21) Anmeldenummer: 96102010.4
(22) Anmeldetag: 12.02.1996
(51) Int. Cl.: H02P 7/00, A61C 1/06

(54) **Schaltungsanordnung zur Steuerung der Drehzahl bei einem zahnärztlichen Antriebsmotor**
Speed control circuit for a dental drive motor
Circuit de régulation de la vitesse pour un moteur d'entraînement dentair

(30) Priorität: 27.02.1995 DE 19506800
(43) Veröffentlichungstag der Anmeldung: 28.08.1996
(73) Patentinhaber: Sirona Dental Systems GmbH, 64625 Bensheim (DE)
(72) Erfinder: Altendorf, Hans-Walter, Dipl.-Ing., D-67551 Worms (DE)
(74) Vertreter: Isenbruck, Günter, Dr.

(56) Entgegenhaltungen:
- EP-A- 0 296 444
- DE-A- 1 413 761
- US-A- 4 677 356

## Beschreibung

Bei zahnärztlichen Arbeiten mit elektrisch angetriebenen Werkzeugen, wie Fräsern oder Wurzelkanalbohrern, kann es unter Umständen vorkommen, daß sich das Werkzeug im Zahnmaterial oder Kieferknochen festfrißt und gegebenenfalls den Antrieb völlig blockiert.

Wenn das Werkzeug nicht allzu fest sitzt, kann es durch Umschalten des Antriebs in die umgekehrte Drehrichtung wieder gelöst werden, wie dies beispielsweise beim Gewindeschneiden praktiziert wird (DE-OS 1 413 761). Löst es sich dadurch nicht, muß das Werkzeug vom Antrieb getrennt werden, damit man es unter Zuhilfenahme eines Spezialwerkzeuges aus dem Material herausnehmen bzw. vom Material losbrechen kann.

Auch mit der allgemein bekannten und in der Implantologie üblichen Drehmomentbegrenzung bei Bohrantrieben kann man dieses Problem nicht lösen, da mit einem geringeren Drehmoment ein Lösen bzw. Losbrechen des Werkzeuges nicht möglich ist.

Aufgabe der vorliegenden Erfindung ist es, eine Lösung anzugeben, mit der ein "Festfressen" des Werkzeuges und gegebenenfalls Blockieren des Antriebes vermieden werden kann.

Erfindungsgemäß enthält die Schaltungsanordnung einen Regler, der so ausgebildet ist, daß er auf einen durch schnellen Lastanstieg verursachten Drehzahlabfall des Antriebes reagiert und das Drehmoment des Antriebes wegschaltet, bevor das Werkzeug zum Stillstand gekommen ist. Damit wird ein "Festfressen" des Werkzeuges in das Material verhindert. Erfindungsgemäß sorgt der Regler durch kurzes Aufschalten des vom Bediener eingestellten Drehmoments dafür, daß das Werkzeug nicht zur Ruhe kommt, somit also nicht stehen bleibt, sondern ständig kurze Impulse bekommt. Dadurch wird die an sich geforderte Drehmomentbegrenzung nicht übergangen und ein gewaltsames Losbrechen verhindert.

Die Impulsleistung muß klein genug sein, damit sich das Werkzeug nicht weiter in das Material einfrißt, sondern, falls die Vorwärtsbewegung blockiert ist, elastisch zurückfedern kann.

Durch die "schlagende Bewegung" wird erreicht, daß das Werkzeug nach Zurücknahme der Andruckkraft durch den Bediener vom Material losgelöst und damit kein Schaden verursacht wird, wie er beispielsweise beim Losbrechen des Werkzeuges aus dem Material entsteht.

Da keine nennenswerte Rückwärtsbewegung des Werkzeuges entsteht, kann der Benutzer fließend weiterarbeiten.

Um den Benutzer rechtzeitig auf einen Störfall hinzuweisen, wird gemäß vorteilhafter Ausgestaltung der Erfindung vorgeschlagen, bei Annäherung an die Überlast ein optisches und/oder akustisches Warnsignal zu erzeugen. In vorteilhafter Weise kann das Signal bei Annäherung entweder in Stufen oder kontinuierlich anschwellen.

Um das Motordrehmoment möglichst schnell auf Null zu bringen, ist der Elektromotor vorteilhafterweise in einer Halbleiter-Vollbrücke geschaltet, deren Schaltelemente die Motorklemmen innerhalb weniger µs, vorzugsweise innerhalb von 1 µs, umpolt. Im Störfall kann so das Motordrehmoment durch Gegenspannung schnell auf Null gebracht werden. Dies kann vorteilhafterweise innerhalb von wenigen ms geschehen.

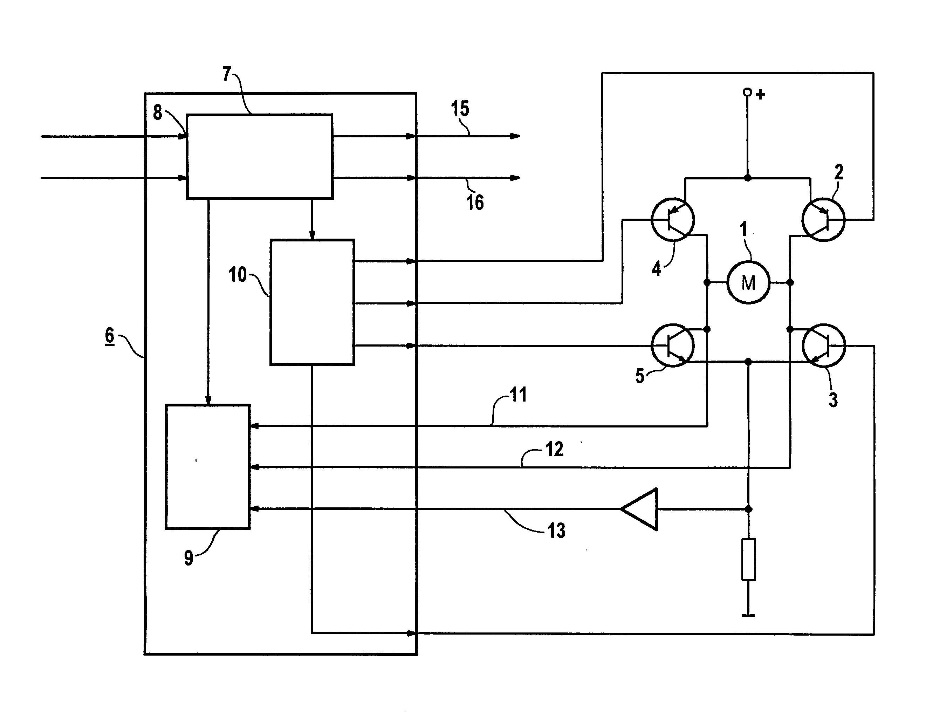

Ein Ausführungsbeispiel der Erfindung wird nachfolgend anhand der Zeichnung näher beschrieben.

Die einzige Figur zeigt ein Blockschaltbild einer Schaltungsanordnung zur Steuerung der Drehzahl eines zahnärztlichen Antriebsmotors. Der Antriebsmotor 1, ein Gleichstromkleinstmotor, ist in Vollbrückenschaltung geschaltet, d.h. vier Transistoren 2 bis 5 übernehmen, wie nachfolgend noch näher erläutert, die Steuerung der Klemmenspannung bzw. des Motorstromes. Mit 6 ist ein Mikrocontroller bezeichnet, der einen Regler 7 mit Soll-/Ist-Vergleich enthält. Die einer Solldrehzahl entsprechenden Werte werden an einen Eingang 8 des Reglers 7 gelegt und im Regler mit Istwerten verglichen. Die Istwerte werden von einem Funktionsblock 9 erhalten, der über Steuerleitungen 11, 12 Werte aus EMK-Messungen für den Rechts- bzw. Linkslauf des Motors und des weiteren über eine Leitung 13 Informationen über den Motorstrom bzw. über eine stromproportionale Spannung erhält.

Der Funktionsblock 10, über den die vier Transistoren 2 bis 5 angesteuert werden, enthält zwei Pulsdauermodulatoren und einen Freilaufkreis, deren Funktionen in der europäischen Patentschrift 0 296 444 näher beschrieben sind. Abweichend von der in der genannten Patentschrift beschriebenen Anordnung sind im vorliegenden Blockschaltbild im Funktionsblock 10 beide Pulsdauermodulatoren integriert. Im Regler 7 werden sowohl Informationen über den Anlaufzustand des Motors als auch Informationen über die aktuelle Drehzahl bewertet und sodann dem Funktionsblock 10 zugeführt oder bei Auftreten eines Fehlers direkt über eine Steuerleitung 15 einem in der Zeichnung nicht dargestellten Fehlermeldungsanzeigeelement zugeführt.

Erfindungswesentlich ist, daß der Regler 7 so ausgebildet ist, daß er auf einen durch raschen Lastanstieg verursachten Drehzahlabfall des Motors reagiert und das Drehmoment des Antriebsmotors wegschaltet, bevor das vom Antrieb angetriebene Werkzeug zum Stillstand gekommen ist. Im Gegensatz zu üblichen Schaltungsanordnungen, bei denen bei starkem Lastanstieg versucht wird, einem Drehzahlabfall entgegenzuwirken und bei Überlast das Drehmoment konstant zu halten, wird gemäß der Erfindung das Drehmoment, kurz bevor das Werkzeug zum Stillstand gekommen ist, weggeschaltet. Damit wird ein "Festfressen" des Werkzeuges in das Material verhindert. Verringert sich das Lastmoment wieder, so wird das Antriebsmoment wieder zugeschaltet. In vorteilhafter Ausgestaltung der Erfindung sorgt der Regler durch kurzes Aufschalten des vom Bediener eingestellten Drehmoments dafür, daß der Motor nicht zum Stillstand kommt, sondern durch ständige Impulse neu aktiviert wird. Dadurch wird die an sich geforderte Drehmomentbegrenzung nicht übergangen und ein gewaltsames Losbrechen des Werkzeuges vom zu bearbeitenden Material verhindert. Die Schaltung ist so ausgelegt, daß die Motorklemmen im Störfall innerhalb von 0,03 bis 1 ms umgepolt werden. Dadurch kann das Motordrehmoment innerhalb von 50 bis 100 ms auf Null gebracht werden. In weiterer vorteilhafter Ausgestaltung der Erfindung kann der Regler 7 bei Annäherung an das eingestellte Maximaldrehmoment ein Ausgangssignal für ein optisches und/oder akustisches Warnsignal erzeugen, welches über die Leitung 16 einer entsprechend ausgebileten Warneinrichtung zugeführt wird. Das Ausgangssignal kann bei Vorliegen eines Warnsignals kontinuierlich, vorteilhafterweise in Stufen, erhöht werden.

Die erfindungsgemäße Schaltungsanordnung eignet sich im besonderen für den Antrieb von Wurzelkanalinstrumenten oder ähnlichen Werkzeugen, bei denen die Gefahr besteht, daß sich das Werkzeug bei der Bearbeitung im Material festhaken und dadurch das Werkzeug beschädigen kann.

## Patentansprüche

1. Schaltungsanordnung zur Steuerung der Drehzahl eines Gleichstromkleinstmotors (1) zum Antrieb zahnärztlicher Werkzeuge, bei der im Motorstromkreis Mittel (2 bis 5) zur kurzzeitigen Unterbrechung des Motorstromes und zur Umschaltung der Klemmenspannung des Motors vorgesehen sind, und bei der ferner ein Mikrocontroller (6) vorhanden ist, der einen Regler (7) mit Soll-/Ist-Vergleich enthält, in welchem die einer Solldrehzahl entsprechenden Sollwerte mit Istwerten verglichen werden, in welchem weiterhin Meßwerte einer Strom- und EMK-Messung eingegeben und verarbeitet werden, wobei der Regler (7) so ausgebildet ist, daß er auf einen durch schnellen Lastanstieg verursachten Drehzahlabfall des Motors reagiert und das Drehmoment des Motors wegschaltet, bevor dieser zum Stillstand gekommen ist, wobei durch Aufschalten von kurzen Impulsen ein Stillstand des Werkzeuges verhindert wird.

2. Schaltungsanordnung nach Anspruch 1, bei der der Antriebsmotor (1) in eine Halbleiter-Vollbrückenschaltung (2 bis 5) geschaltet ist, deren Schaltelemente die Motorklemmen vorzugsweise innerhalb 1 µs umpolen und dadurch eine Gegen-EMK erzeugen.

3. Schaltungsanordnung nach Anspruch 1 oder 2, bei der der Regler bei Annäherung an das Maximaldrehmoment ein Ausgangssignal für ein optisches und/oder akustisches Warnsignal erzeugt.

4. Schaltungsanordnung nach Anspruch 3, bei der das Ausgangssignal bei Vorliegen eines Warnsignals kontinuierlich oder in Stufen erhöht wird.

## Claims

1. Circuit arrangement for controlling the speed of a DC miniature motor (1) for driving dental tools, in which means (2 to 5) for briefly interrupting the motor current and for reversing the terminal voltage of the motor are provided in the motor circuit, and in which furthermore, a microcontroller (6) is present which includes a regulator (7) with desired/actual comparison, in which the desired values corresponding to a desired speed are compared with actual values, in which, furthermore, measured values of a measurement of current and EMF are input and processed, the regulator (7) being designed such that it reacts to a drop in motor speed caused by a rapid load increase, and switches off the torque of the motor before the latter has come to a standstill, a standstill of the tool being prevented by applying short pulses.

2. Circuit arrangement according to Claim 1, in which the drive motor (1) is switched into a semiconductor full bridge circuit (2 to 5) whose switching elements reverse the polarity of the motor terminals, preferably within 1 µs, and thereby generate a counter-EMF.

3. Circuit arrangement according to Claim 1 or 2, in which when the maximum torque is approached the regulator generates an output signal for an optical and/or acoustic warning signal.

4. Circuit arrangement according to Claim 3, in which given the presence of a warning signal the output signal is increased continuously or in steps.

## Revendications

1. Montage pour commander la vitesse de rotation d'un micromoteur à courant continu (1) destiné à entraîner des outils de dentiste, dans lequel il est prévu dans le circuit de courant de moteur des moyens (2 à 5) pour interrompre brièvement le courant de moteur et pour commuter la tension aux bornes du moteur et dans lequel il est prévu en plus un microcontrôleur (6) qui contient un régulateur (7) à comparaison entre valeur réelle et valeur de consigne dans lequel les valeurs de consigne correspondant à une vitesse de consigne sont comparées à des valeurs réelles et dans lequel des valeurs mesurées d'une mesure de courant et de f.é.m. sont entrées et traitées, le régulateur (7) étant conçu de telle sorte qu'il réagit à une chute de vitesse du moteur due à une augmentation rapide de la charge et coupe le couple du moteur avant que celui-ci s'immobilise, une immobilisation de l'outil étant empêchée par l'application de courtes impulsions.

2. Montage selon la revendication 1, selon lequel le moteur d'entraînement (1) est branché dans un circuit en pont intégral à semi-conducteurs (2 à 5) dont les éléments de circuit inversent la polarité aux bornes du moteur de préférence en 1 µs et produisent ainsi une f.c.é.m..

3. Montage selon la revendication 1 ou 2, dans lequel, à l'approche du couple maximal, le régulateur délivre un signal de sortie pour un signal d'avertissement optique et/ou acoustique.

4. Montage selon la revendication 3, dans lequel, en présence d'un signal d'avertissement, le signal de sortie est augmenté de manière continue ou par degrés.
